(19) Europäisches Patentamt
European Patent Office
Office européen des brevets

(11) **EP 2 433 108 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **10730064.2**

(22) Anmeldetag: **20.05.2010**

(51) Int Cl.:
*G01L 11/02* (2006.01)          *G01N 21/35* (2014.01)

(86) Internationale Anmeldenummer:
**PCT/EP2010/003113**

(87) Internationale Veröffentlichungsnummer:
**WO 2010/136154 (02.12.2010 Gazette 2010/48)**

(54) **VERFAHREN UND VORRICHTUNG ZUR OPTISCHEN DRUCKMESSUNG EINES GASES IN EINEM GESCHLOSSENEN BEHÄLTER**

METHOD AND DEVICE FOR OPTICAL PRESSURE MEASUREMENT OF A GAS IN A CLOSED CONTAINER

PROCÉDÉ ET DISPOSITIF POUR MESURER PAR VOIE OPTIQUE LA PRESSION D'UN GAZ DANS UN CONTENANT FERMÉ

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.05.2009 DE 102009022465**

(43) Veröffentlichungstag der Anmeldung:
**28.03.2012 Patentblatt 2012/13**

(73) Patentinhaber: **HEUFT SYSTEMTECHNIK GMBH 56659 Burgbrohl (DE)**

(72) Erfinder:
• **BAUMANN, Bernd**
**22299 Hamburg (DE)**
• **WOLFF, Marcus**
**22149 Hamburg (DE)**

(74) Vertreter: **Gritschneder, Martin et al**
**Abitz & Partner**
**Patentanwälte mbB**
**Postfach 86 01 09**
**81628 München (DE)**

(56) Entgegenhaltungen:
EP-A2- 1 808 683          WO-A1-2009/006944
WO-A2-2008/053507          DE-A1- 2 727 976
JP-A- 62 156 543          US-A- 5 473 161
US-A- 5 614 718          US-A- 5 912 457

EP 2 433 108 B1

**Beschreibung**

Die vorliegende Erfindung betrifft ein Verfahren und eine Vorrichtung zur optischen Druckmessung eines Gases in einem geschlossenen Behälter.

Zur Messung des Drucks in Getränkeflaschen sind Verfahren bekannt, die auf einer mehrfachen Volumenexpansion beruhen (AT 409 673, GB 2,373,584, US 6,874,351). Da das Getränk hierfür in eine besondere Messkammer eingefüllt werden muss, erlauben diese Verfahren ausschließlich Stichprobenmessungen. Auch die beispielsweise aus DE 10 2007 027 708 A1 bekannten, in die Flaschen eingebrachten Drucksensoren ermöglichen keine online/inline Messung. Aus DE 10 2006 001 902 B4, DE 10 2006 030 296 A1 und JP 00 2006 030 161 AA sind Verfahren zur optischen Druckmessung im geschlossenen Behälter bekannt, bei denen die Absorptionslinie des eingeschlossenen Gases mit Hilfe eines Lasers gemessen wird. Hierfür muss gewährleistet sein, dass der Laser nur eine longitudinale Mode emittiert, die zudem reproduzierbar spektral durchstimmbar ist. Dies ermöglichen ausschließlich hochpreisige Laser. Darüber hinaus ist hierfür eine außerordentlich genaue Steuerung des Betriebsstroms und der Betriebstemperatur des Lasers erforderlich, was den Aufwand weiter erhöht. Die genaue Vermessung einer Absorptionslinie dauert so lange, dass diese Verfahren für eine Automatisierung ungeeignet sind. Da sich Absorptionslinien, wie unten näher ausgeführt, bei hohen Drücken so stark verbreitern, dass sie mit den benachbarten Linien verschmelzen, werden die Linien mit zunehmendem Druck ununterscheidbar und die Messgenauigkeit reduziert sich. Ab einem bestimmten Druck werden die Linien ununterscheidbar. Daher weist das Verfahren auch nur einen begrenzten Messbereich auf und ist für niedrige Drücke vorgesehen.

Aus EP 1 450 139 ist ein Verfahren bekannt, um den gesamten Luftmassenstrom durch eine Brennkraftmaschine zu bestimmen. Hierzu wird die Konzentration von Kohlendioxid durch Erfassung des Infrarotabsorptionsspektrums bestimmt. Zur Auswertung wird das gemessene Kohlendioxidabsorptionsspektrum mit einer Vielzahl von rechnerisch simulierten Kohlendioxidabsorptionsspektren verglichen, um eine Übereinstimmung zu finden. Die rechnerisch simulierten Kohlendioxidabsorptionsspektren entsprechen verschiedenen Temperaturen und verschiedenen Konzentrationen des Kohlendioxids.

Aus US 2005/0022603 A1 ist ein Verfahren bekannt, den Druck in einem geschlossenen Behälter zu bestimmen. Hierbei wird die Wellenlänge eines Laser periodisch in einem Wellenlängenbereich, der mindestens eine Absorptionslinie des zu untersuchenden Gases umfasst, moduliert. Die durch die periodisch modulierte Wellenlänge entstehenden elektrischen Ausgangssignale werden anschließend einer Frequenzfilterung mit einem Bandfilter oder einem Filter mit einer Grenzfrequenz unterworfen. Die gefilterten Signale werden dann im Hinblick auf den Druck des Gases ausgewertet.

Aus DE 27 27 976 ist ein Verfahren zum Bestimmen des Partialdrucks und der Konzentration eines Gases bekannt, bei dem über ein Filterrad ein mit Gas gefüllte Referenzfilter und ein evakuierter Filter abwechselnd in einen Strahlgang gebracht werden, um aus der Intensitätsdifferenz den Partialdruck des Gases zu bestimmen.

Aus US 5,614,718 ist ein Verfahren zur Bestimmung eines Partialdrucks bekannt, bei dem ein Vorhersagemodell ermittelt und mit Hilfe einer Spektralanalyse aufgezeichnete Werte anhand des Vorhersagemodells ein Druckwert zugeordnet wird.

Aus WO 2008/053507 A2 ist ein Verfahren zur Erfassung eines Gasdrucks bekannt, bei dem ein aufgezeichnetes Druckspektrum von überlagerten Störeffekten befreit wird, um die Absorptionslinie zu vermessen.

Aus Patent Abstracts of JP 62 156543 ist ein Verfahren zur Messung eines Partialdrucks eines Gases bekannt, bei dem ein transmittierter Lichtstrahl über einen Strahlteiler mit der Absorptionswellenlänge geteilt wird.

Aus EP 1 808 683 ist ein Verfahren zur Ermittlung des Drucks eines Gases oder eines Gasgemisches in einem Unterdruckgefäß mittels Absorptionsspektroskopie bekannt. Hierbei werden zwei Absorptionskurven aufgezeichnet und über einen Proportionalitätsfaktor einander zugeordnet, wobei der Proportionalitätsfaktor dem Partialdruck entspricht.

Aus US 5,573,161 ist ein Verfahren zur Bestimmung der Kohlendioxid-Konzentration in Flaschen bekannt geworden, bei dem die Intensität der transmittierten Strahlung für die Absorptionswellenlänge ausgewertet wird.

Der Erfindung liegt die Aufgabe zugrunde, für eine optische Druckmessung eines Gases in einem geschlossenen Behälter ein möglichst einfaches und robustes Verfahren sowie eine Vorrichtung zur Durchführung des Verfahrens bereitzustellen, die auch für einen industriellen Einsatz geeignet sind.

Erfindungsgemäß wird die Aufgabe durch ein Verfahren mit den Merkmalen aus Anspruch 1 gelöst.

Bei dem erfindungsgemäßen Verfahren wird eine Strahlung eines Strahlers durch den Behälter gelenkt und die transmittierte Strahlung in einem Detektor gemessen. Erfindungsgemäß besitzt die Strahlung des Strahlers mindestens einen ersten Wellenlängenbereich, in dem eine Absorption der Strahlung durch das Gas erfolgt. Der Strahler strahlt also in einem Wellenlängenspektrum ab, das mindestens eine Absorptionslinie des zu messenden Gases aufweist. Ein Detektor erfasst die Intensität der transmittierten Strahlung in einem zweiten Wellenlängenbereich. Der zweite Wellenlängenbereich ist dabei so gewählt, dass er mindestens in dem Absorptionsbereich mit dem ersten Wellenlängenbereich des Strahlers überlappt. Erfindungsgemäß wird eine aufakkumulierte Intensität der erfassten Strahlung in dem zweiten Wellenlängen-bereich einem Druck des Gases zugeordnet. Die Zuordnung erfolgt bevorzugt über eine Kennlinie, die abhängig von der aufakkumulierten Intensität der erfassten Strahlung einen Druckwert angibt.

Bei dem erfindungsgemäßen Verfahren strahlt der Strahler in dem ersten Wellenlängenbereich mit einem kontiniuerlichen Spektrum ab. Anders als bei Lösungen aus dem Stand der Technik, die mit Laserlicht arbeiten, kann bei dem erfindungsgemäßen Verfahren ein Strahler mit einem kontinuierlichem Spektrum verwendet werden. Dies besitzt den Vorteil, dass ein Modulieren der Wellenlängen entfallen kann. Die aufakkumulierte Intensität wird in einem zweiten Wellenlängenbereich durch Aufaddieren oder Aufintegrieren der Intensität über die Wellenlänge ermittelt.

Bei dem erfindungsgemäßen Verfahren erfolgt im Gegensatz zu den aus dem Stand der Technik bekannten Verfahren keine Spektralanalyse bei der ein spektral durchstimmbarer Laser eingesetzt wird, um möglichst genau die Position der Absorptionslinie zu erfassen. Das erfindungsgemäße Verfahren beruht auf der Erkenntnis, dass auch die aufakkumulierte Intensität der erfassten Strahlung in dem zweiten Wellenlängenbereich ein sehr genauer Indikator für den Druck des zu messenden Gases ist. Diese Erkenntnis erlaubt es, ein besonders einfaches und robustes Messverfahren bereitzustellen, bei dem der Strahler in einem ersten Wellenlängenbereich abstrahlt und der Detektor eine aufakkumulierte Intensität der transmittierten Strahlung erfasst.

In einer bevorzugten Ausgestaltung erfolgt die Lenkung der Strahlung durch das Gas in der Gasphase. Alternativ ist es auch möglich, die Strahlung durch die Flüssigkeitsphase zu lenken, um den Druck des gelösten Gases zu messen.

In einer bevorzugten Ausgestaltung ist als Strahler ein thermischer Strahler vorgesehen, dessen abgestrahltes Spektrum einem Planckschen Spektrum entspricht. Solche Strahler sind besonders robust und können durch die Einstellung ihrer Temperatur auf den gewünschten ersten Wellenlängenbereich eingestellt werden.

In einer alternativen Ausgestaltung ist vorgesehen, als Strahler mindestens eine Leuchtdiode zu verwenden. Die Leuchtdiode emittiert Strahlung in einem engeren Frequenzbereich als der zuvor angesprochene Plancksche Strahler. Jedoch sind heute robuste Leuchtdioden verfügbar, die in einem ausreichend breiten Spektrum abstrahlen, das als kontinuierlich in einem Wellenlängenbereich angesehen werden kann.

Erfindungsgemäß umfasst der zweite Wellenlängen-bereich des Detektors, in dem die aufakkumulierte Intensität ermittelt wird, ebenfalls den Wellenlängenbereich, in dem eine Absorption der Strahlung durch das Gas erfolgt. Es hat sich herausgestellt, dass die erfindungsgemäß ermittelten Druckwerte besonders zuverlässig sind, wenn die Wellenlängen, die zu dem aufakkumulierten Wert für die Intensität beitragen, in dem Absorptionsspektrum liegen.

In einer möglichen Ausgestaltung kann vorgesehen sein, die Strahlung aus dem ersten Wellenlängenbereich des Strahlers durch einen oder mehrere Filter auf den zweiten Wellenlängenbereich zu begrenzen. Der Detektor erfasst die Strahlung im zweiten Wellenlängenbereich und ermittelt aus dieser die aufakkumulierte Intensität.

In einer bevorzugten Ausgestaltung des erfindungsgemäßen Verfahrens erfolgt die Zuordnung der Werte für die aufakkumulierte Intensität zu dem Druckwert des Gases über eine Kennlinie. Anhand einer vorbestimmten Kennlinie, kann der aufakkumulierten Intensität ein Druckwert zugeordnet werden, der dem Druck des Gases in dem geschlossenen Behälter entspricht.

Besonders geeignet ist das erfindungsgemäße Verfahren zur Druckmessung bei Kohlendioxid. Bekanntermaßen besitzt Kohlendioxid eine Absorptionsbande für Wellenlängen zwischen 1,9 $\mu$m und 2,1 $\mu$m, wobei die Absorption druckabhängig ist. Grundsätzlich ist das erfindungsgemäße Verfahren aber auch geeignet, um bei anderen Gasen eingesetzt zu werden.

Drei Anwendungen des Verfahrens sind besonders vorteilhaft, da die Umgebungsbedingungen ein robustes Verfahren erfordern. Die erste bevorzugte Anwendungsmöglichkeit besteht darin, die Strahlung durch eine verschlossene Getränkeflasche zu lenken. Hierdurch kann der Kohlendioxiddruck in der Flasche gemessen werden. Diese Messung erfolgt schnell und zuverlässig und kann auch bei der Abfüllung von Flaschen eingesetzt werden.

Eine weitere Anwendung besteht in einer Prüfung einer Schutzgasfüllung. Insbesondere in der Lebensmitteltechnik werden Schutzgasfüllungen eingesetzt, um die Haltbarkeit von Lebensmitteln zu verbessern. Hierbei besteht der Bedarf, zu prüfen, ob die Schutzgasfüllung ordnungsgemäß eingebracht wurde. Mit dem erfindungsgemäßen Verfahren kann der Druck der Schutzgasfüllung bzw. einer Komponente der Schutzgasfüllung zuverlässig erfasst werden, wodurch das ordnungsgemäße Einbringen der Schutzgasfüllung feststellbar ist.

Eine weitere Anwendungsmöglichkeit der Erfindung besteht in der Prüfung von vakuumverschlossenen Behältern. Solche Behälter werden beispielsweise in der Lebensmittelindustrie eingesetzt. Bei der Vakuumverpackung kann mit Hilfe des erfindungsgemäßen Verfahrens zuverlässig festgestellt werden, dass ein niedriger Druck in dem Behälter herrscht, so dass ein ordnungsgemäßer Vakuumverschluss vorliegt.

Die erfindungsgemäße Aufgabe wird ebenfalls durch eine Vorrichtung zur optischen Druckmessung mit den Merkmalen aus Anspruch 13 gelöst.

Die erfindungsgemäße Vorrichtung besteht aus einem Strahler, einem Detektor und einer Auswerteeinheit. Der Strahler erzeugt eine Strahlung in einem ersten Wellenlängenbereich, wobei der erste Wellenlängenbereich derart gewählt ist, dass eine Absorption der Strahlung durch das Gas erfolgt. Das Gas besitzt also mindestens eine Absorptionslinie in dem ersten Wellenlängenbereich. Der Detektor erfasst die Intensität der durch den Behälter und das Gas transmittierten Strahlung in einem zweiten Wellenlängenbereich, wobei der zweite Wellenlängenbereich mindestens in dem Absorptionsbereich mit dem ersten Wellenlängenbereich überlappt. Die Auswerteeinheit ordnet die in dem zweiten Wellenlängenbereich aufakkumulierte Intensität der erfassten Strahlung einen Druckwert zu. Der Schritt des Aufakkumulierens erfolgt aus technischen Gründen bevorzugt durch den Detektor, der direkt über den zweiten Wellenlängenbereich die aufakkumulierte Intensität der Strahlung erfasst. Die erfindungsgemäße Vorrichtung kann mit einfachen und für den Industrieeinsatz tauglichen Komponenten kostengünstig hergestellt werden.

Bevorzugt wird ein thermischer Strahler eingesetzt, dessen abgestrahltes Spektrum einem Planckschen Spektrum entspricht. Alternativ ist es auch möglich als Strahler eine oder mehrere Leuchtdioden mit einem kontinuierlichen Spektrum vorzusehen. Ebenfalls kann ein Laser, insbesondere ein Halbleiterlaser eingesetzt werden.

In einer bevorzugten Ausgestaltung weist der Detektor innerhalb des zweiten Wellenlängenbereichs mehrere umschaltbare Messbereiche auf, in denen für unterschiedliche Druckbereiche des Gases der Druckwert ermittelt werden kann. Bei einem Einsatz, bei dem es erforderlich ist, über einen großen Druckbereich zu messen, kann es zweckmäßig sein, an dem Detektor umschaltbare Messbereiche vorzusehen, die je nach Erfordernis gewählt werden können.

Zweckmäßigerweise erfolgt in der Auswerteeinheit die Zuordnung der aufakkumulierten Intensität zu dem Druckwert über eine Kennlinie. In der Auswerteeinheit ist hierzu eine vorbestimmte Kennlinie hinterlegt, die einem Wert für die aufakkumulierte Intensität eindeutig einen Druckwert des Gases zuordnet.

Bevorzugt können in der Auswerteeinheit auch mehrere Kennlinien abhängig von dem Transmissionsspektrum des Behälters vorgesehen sein, die jeweils abhängig von der aufakkumulierten Intensität den Druckwert vorgeben. Die Verwendung von unterschiedlichen Kennlinien trägt der Tatsache Rechnung, dass die Intensität der aufakkumulierten Strahlung auch von dem Transmissionsspektrum des Behälters abhängt.

Die Erfindung wird nachfolgend anhand der Figuren näher erläutert. Es zeigt:

Fig. 1    die Transmission durch eine mit $CO_2$ gefüllte Absorptionsstrecke als Funktion des Drucks in einem Wellenlängenbereich von 2,00370 μm bis 2,00380 μm,

Fig. 2    die Transmission durch eine mit $CO_2$ gefüllte Absorptionsstrecke als Funktion des Drucks in einem Wellenlängenbereich von 1,98 μm bis 2,04 μm,

Fig. 2a   das Transmissionsspektrum gemäß Fig. 2, wobei der aufakkumulierte Wert der Intensität hervorgehoben dargestellt ist,

Fig. 3    eine schematische Darstellung, bei der die Strahlung durch eine Gasphase gelenkt wird,

Fig. 4    eine schematische Darstellung, bei der die Strahlung durch eine Flüssigkeitsphase gelenkt wird und

Fig. 5    eine Kennlinie für eine Zuordnung der aufakkumulierten Intensität zu dem Druckwert.

Zum besseren Verständnis der Erfindung seien die physikalischen Grundprinzipien der optischen Druckmessung von Gasen vorangestellt:

Die optische Druckmessung beruht auf Absorption elektromagnetischer Strahlung durch Moleküle gemäß dem Lambert-Beerschen Gesetz

$$I_{Trans} = I_0 \exp( \alpha\ d )$$

wobei $I_{Trans}$ die transmittierte Intensität ist, $I_0$ die eingestrahlte Intensität, $\alpha$ der Absorptionskoeffizient und $d$ die Pfadlänge durch das Messvolumen. Für den von der Frequenz $v$ abhängigen Absorptionskoeffizienten gilt:

$$\alpha(v) = \sigma(v)N ,$$

wobei $N$ die Anzahl der absorbierenden Moleküle pro Volumen und $\sigma(v)$ der wellenlängenabhängige Absorptions-Wirkungsquerschnitt ist. Aus dem idealen Gasgesetz folgt, dass die Moleküldichte $\rho$ (Teilchenanzahl pro Volumen) bei konstanter Temperatur T proportional zum Druck p ist ($\kappa$: Boltzmann. Konstante):

$$\rho = p/(\kappa T) .$$

Wenn die Transmission bei einer bestimmten Wellenlänge gemessen wird, kann daraus also der Druck bestimmt werden.

Wird eine spektral breite Strahlungsquelle wie beispielsweise ein thermischer Strahler oder eine Leuchtdiode LED verwendet, findet Absorption nicht nur auf einer Absorptionslinie statt, sondern auf mindestens einer Absorptionsbande, die aus mehreren Absorptionslinien besteht. Absorptionslinien sind nicht unendlich scharf, sondern weisen ein spektrales Profil auf. Es gilt

$$\sigma(v) = SG(v - v_0)$$

mit der Linienstärke S, der Linienformfunktion $G(v\text{-}v_0)$

und der Frequenz der Linienmitte $v_0$. Bei höheren Drücken ($p \gg 100$ hPa) kann davon ausgegangen werden, das die Linie ein Lorentzprofil aufweist:

$$G(v - v_0) = \frac{\Delta v / 2\pi}{(v - v_0)^2 + (\Delta v / 2)^2} \, .$$

Die Linienbreit $\Delta v$ ist dabei direkt proportional zum Druck $p$ :

$$\Delta v = \frac{\sqrt{8}a^2}{\sqrt{\pi m \kappa T}} \, p \, ,$$

wobei a der Moleküldurchmesser und m die Molekülmasse sind. Mit zunehmendem Druck werden die Absorptionslinien aufgrund der steigenden Moleküldichte also nicht nur stärker, sondern auch breiter. Bei Verwendung spektral breiter Strahlungsquellen stellt das Transmissionssignal dann das Integral der Transmission über den spektralen Emissionsbereich der Strahlungsquelle gefaltet mit der spektralen Empfindlichkeit des Detektors dar.

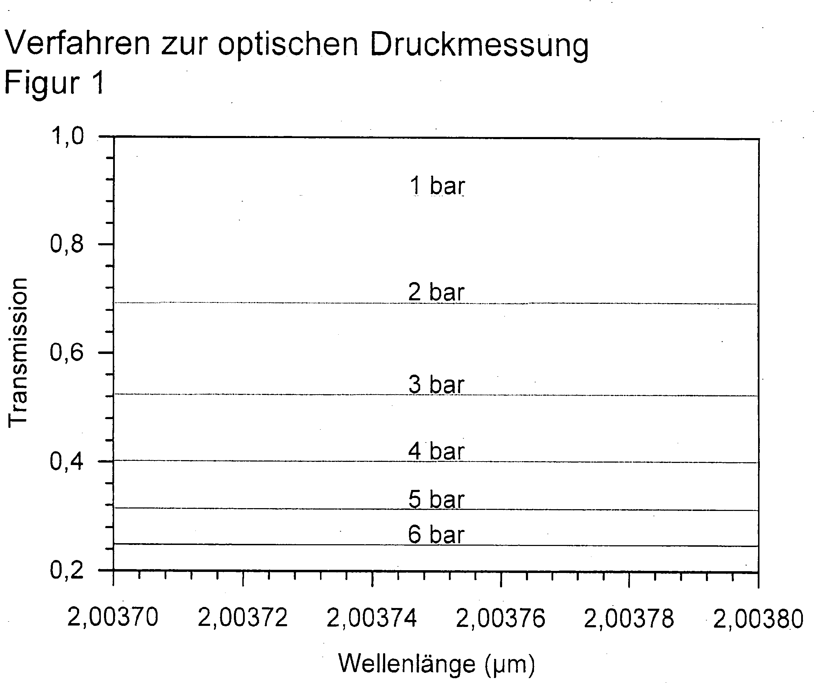

Fig. 1 zeigt ein einfaches Beispiel, bei dem in einem sehr engen Wellenlängenbereich die Transmission gemessen wird. Hier ergibt sich eine klare Druckabhängigkeit der Intensität für den engen Wellenlängenbereich.

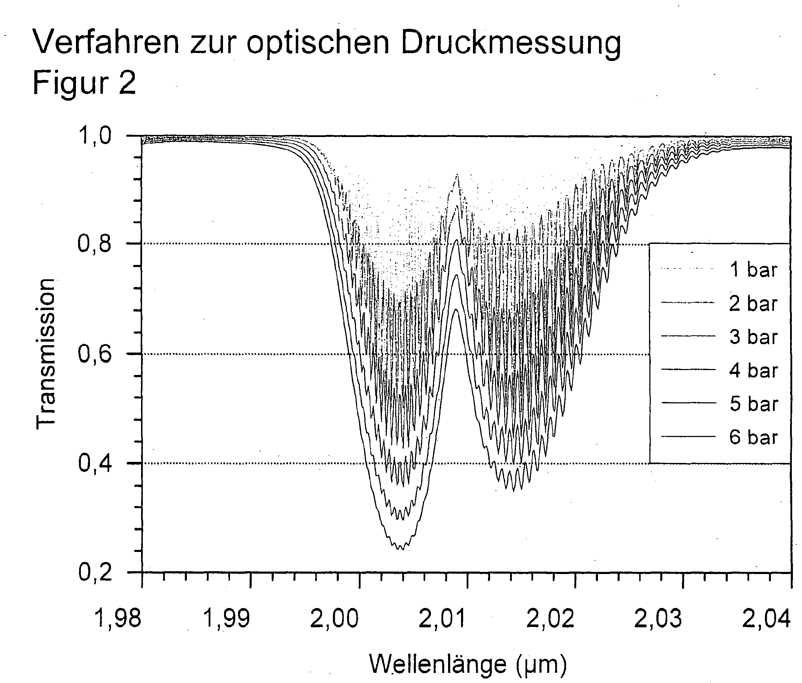

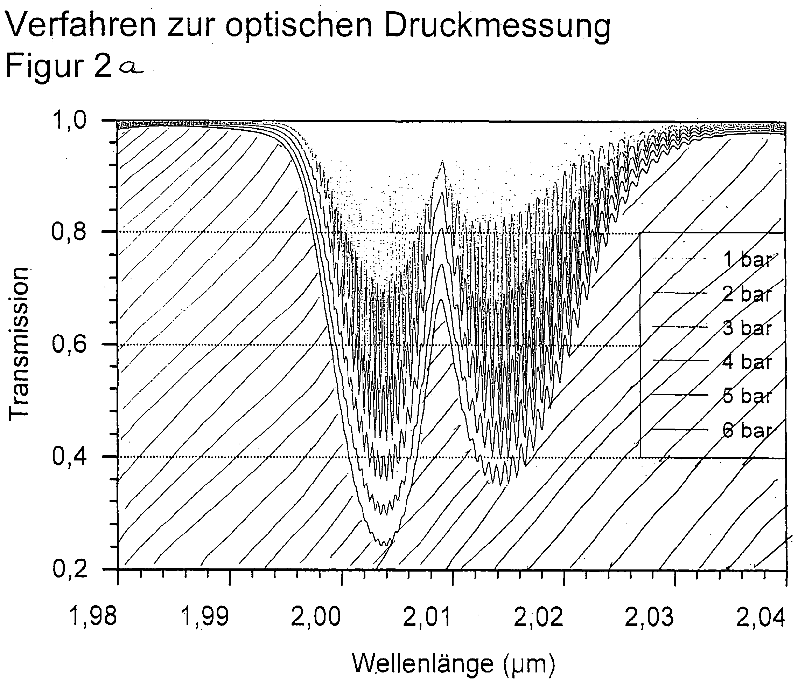

Will man aber die zuletzt dargestellte druckabhängige Linienverbreiterung ebenfalls auswerten, so ist es hilfreich, über einen größeren Wellenlängenbereich zu messen. Fig. 2 zeigt beispielhaft die Transmission über den größeren Wellenlängenbereich gemessen. Abhängig vom Druck ergibt sich eine ungefähr W-förmige Transmissionskurve, die zudem eine feine Wellenstruktur aufweist. Fig. 2 verdeutlicht die beiden zuvor diskutierten Phänomene. Einerseits ist deutlich zu erkennen, dass die Transmissionskurve mit zunehmendem Druck stets geringere Werte annimmt. Ebenfalls ist in Fig. 2 deutlich zu erkennen, dass die Transmissionskurve mit zunehmendem Druck breiter wird.

Andererseits zeigt Fig. 2 auch deutlich, dass die Auswertung des Transmissionswertes für genau eine Wellenlänge aufgrund der überlagerten feinen Wellenstruktur sehr schwierig ist. Hinzu kommt, dass die genaue Lage dieser feinen Wellenstruktur abhängig von der Temperatur ist, wodurch die Messung noch weiter erschwert wird.

Bei dem erfindungsgemäßen Verfahren wird zur Bestimmung des Drucks die aufakkumulierte Intensität der transmittierten Strahlung gemessen. Dies entspricht der in Fig. 2a schraffiert dargestellten Fläche. Deutlich zu erkennen ist, dass aufgrund der Aufakkumulation der Intensität die in der Transmissionskurve vorhandene überlagerte feine Wellenstruktur keine entscheidende Bedeutung auf den Druckwert hat. Hinzu kommt, dass gerade durch das Zusammenspiel der beiden Effekte der Druck besonders präzise erfasst werden kann.

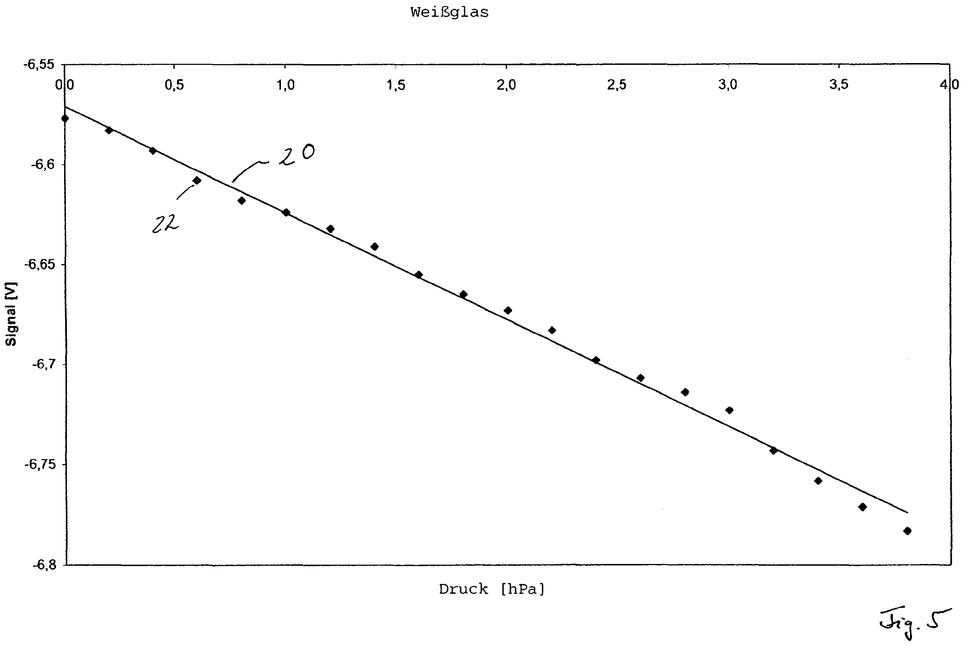

Fig. 5 zeigt die Messergebnisse in einem Druckbereich von 0 bar bis 4 bar und die dazugehörigen Signalwerte in Volt für eine Photozelle. Deutlich zu erkennen ist, dass die aufakkumulierten Werte sehr gut einer Geraden 20 folgen. Die Abweichung der Werte 22 von der Geraden 20 führen zu Ungenauigkeiten in der Druckmessung, die im Bereich von 1/100 bar oder weniger liegen und für eine industrielle Anwendung nicht relevant sind.

Mit dem erfindungsgemäßen Verfahren wird die Absorptionskurve des Gases nicht mehr mit einem spektral durchstimmbaren einzelmodigen Laser gemessen. Der Druck wird nach dem erfindungsgemäßen Verfahren direkt über die gesamte Transmissionskurve bestimmt. Dies ermöglicht erfindungsgemäß eine einfachere, schnellere und kostengünstigere Druckmessung unter Verwendung von kompakteren Sensoren. Die Einfachheit erhöht gleichzeitig auch das Automatisierungspotential. Da Änderungen der Transmission bei höheren Drücken besonders deutlich sind, erlaubt das neue Verfahren außerdem erfindungsgemäß eine höhere Messgenauigkeit und einen größeren Messbereich.

Eine vorteilhafte Ausgestaltung der Erfindung sieht vor, dass es sich bei der Strahlungsquelle um einen thermischen Strahler handelt, der ein Plancksches Spektrum emittiert. Diese Strahler sind besonders kostengünstig und einfach zu betreiben und ermöglichen erfindungsgemäß eine einfachere, schnellere und kostengünstigere Druckmessung. Zudem lässt sich die Absorption auf einem ganzen (oder mehreren) Absorptionsbanden nutzen, was eine spektrale Verstimmung des Strahlers ausschließt und so erfindungsgemäß das Automatisierungspotential erhöht.

Gemäß einer weiteren vorteilhaften Ausgestaltung wird zur spektralen Verschmälerung des thermischen Strahlers ein optisches Filter in dem Strahlengang eingefügt. Da das Emissionsspektrum so genau auf die Absorption der absorbierenden Komponente abgestimmt werden kann, erlaubt diese Maßnahme eine höhere Messgenauigkeit.

Eine weitere Ausgestaltung sieht vor, dass es sich bei der Strahlungsquelle um eine LED handelt. Deren Emissionsspektrum kann perfekt auf die Absorption der zu absorbierenden Komponente abgestimmt werden. Diese Maßnahme erlaubt eine höhere Messgenauigkeit. Da LEDs sehr kleine Strahlungsquellen sind, erlaubt sie zudem besonders kompakte Sensoren.

Der Einsatz eines Lasers als Strahlungsquelle ermöglicht durch die hohe spektrale Emissionsleistung große Signale, die die Messempfindlichkeit erhöhen. Handelt es sich zudem um einen Halbleiterlaser, erlaubt dies besonders kompakte Sensoren.

Eine weitere Ausgestaltung beschreibt den Einsatz einer modulierten Strahlungsquelle in Kombination mit einer frequenzselektiven Strahlungsverarbeitung.

Diese Maßnahme eliminiert Hintergrundsignale und erhöht so die Messempfindlichkeit.

Die Reflexion der Strahlung nach dem Passieren des Behälters und das nochmalige Passieren des Behälters erlaubt entsprechend einer Ausgestaltung eine Erhöhung der Messempfindlichkeit. Die Vielfachreflexion mit weiteren Reflektoren erlaubt eine weitere Erhöhung der Messempfindlichkeit.

Das Automatisierungspotential wird dadurch erhöht, dass die Kalibrierung durch eine Messung der Strahlung ohne Behälter im Strahlengang erfolgt. Dies sieht eine Ausgestaltung vor.

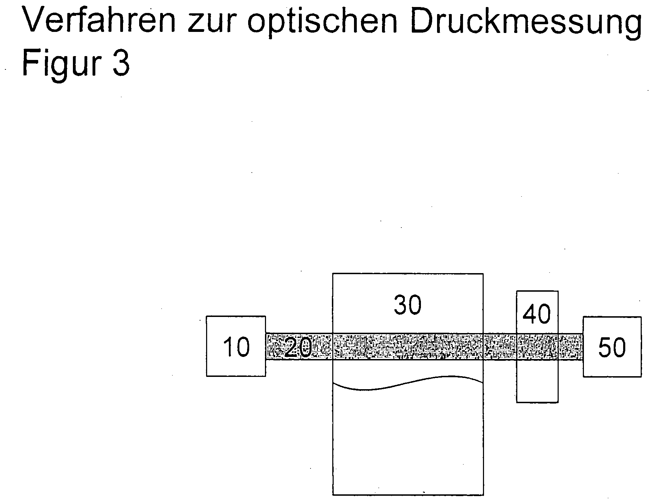

Ein erstes Ausführungsbeispiel der Erfindung ist in Fig. 3 dargestellt. Dieses stellt eine Anwendung der Erfindung in der Qualitätskontrolle der Schaumweinproduktion dar. Champagner, Sekt, Perlwein, Prosecco, etc. werden im Flaschengärungsverfahren hergestellt. Der größte Teil des bei der Gärung entstehenden Kohlendioxid ($CO_2$) löst sich in der Flüssigkeit. Zum Teil sammelt es sich aber auch über der Flüssigkeit, bis sich ein Gleichgewicht mit dem gelösten $CO_2$ eingestellt hat. Es stellen sich dabei je nach Schaumwein-Sorte Drücke zwischen 2 bar und 6 bar ein. Eine Messung des Drucks gibt Aufschluss über die Qualität des Schaumweins und lässt gleichzeitig undichte Flaschenverschlüsse erkennen. Dieses Ausführungsbeispiel der Erfindung dient zur nicht-invasiven online/inline Bestimmung des $CO_2$-Drucks in der geschlossenen Flasche. Hierfür wird die infrarote Strahlung 20 einer thermischen Strahlungsquelle 10 (Quarzrohrstrahler) durch den mit Gas gefüllten Teil des Halses der verkorkten Schaumweinflasche 30 gelenkt. Die austretende Strahlung passiert ein Interferenz-Bandpassfilter 40, dessen Transmission im spektralen Bereich von 1,99 $\mu$m bis 2,02 $\mu$m liegt (z. B. Modell BP-1982-87 nm der Firma Spectrogon AB in Schweden). In diesem Wellenlängenbereich absorbiert $CO_2$ sehr gut und die verschiedenfarbigen Flaschengläser zeigen eine akzeptable Transmission. Die Detektion der Strahlung erfolgt dann mit Hilfe einer Photodiode, so beispielsweise einer InGaAs-Photodiode. Aus dem Transmissionssignal und der gleichzeitig gemessenen Temperatur bestimmt das kalibrierte System den Druck. Dieses Ausführungsbeispiel der Erfindung kann auch zur Aufzeichnung einer Gärkurve von Schaumwein eingesetzt werden.

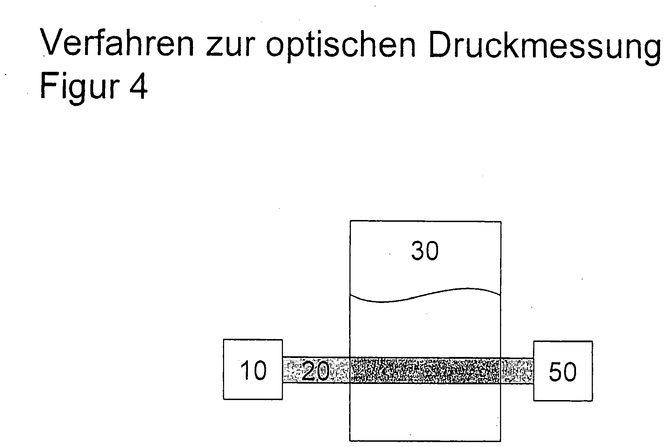

Ein zweites Ausführungsbeispiel der Erfindung ist in Fig. 4 dargestellt. Dieses stellt eine Anwendung der Erfindung in der Qualitätskontrolle der Produktion von Mineralwasser, Limonade und Mixgetränken dar. Diese Getränke enthalten Kohlendioxid, um beim Trinken einen besseren Erfrischungseffekt zu erzielen. Das $CO_2$ wird dabei unter hohem Druck in das Getränk gepumpt. Dabei reagiert $CO_2$ zu etwa 0,2 % mit Wasser zu Kohlensäure ($H_2CO_3$). Der größte Teil ist jedoch im Wasser gelöst. Nach Verschluss der Getränkeflaschen sammelt sich solange $CO_2$ über der Flüssigkeit, bis sich ein Gleichgewicht mit dem gelösten Gas eingestellt hat. Es entstehen dabei je nach Kohlensäuregehalt Drücke von mehreren bar. Eine Messung des $CO_2$-Gehalts in der Flüssigkeit oder des $CO_2$-Drucks über der Flüssigkeit gibt Aufschluss über die Qualität des Getränks und lässt gleichzeitig undichte Flaschen erkennen. Die Erfindung dient zur nicht-invasiven online/inline Bestimmung des gelösten Kohlendioxids in der geschlossenen Flasche. Hierfür wird die infrarote Strahlung 20 einer thermischen Strahlungsquelle 10 durch den mit Flüssigkeit gefüllten Teil der Getränkeflasche 30 gelenkt. Für die Messung wird der Spektralbereich der Strahlung genutzt, in dem $CO_2$ eine gute Absorption und die verschiedenfarbigen Glas- und PET-Flaschen eine ausreichende Transmission aufweisen. Die Detektion der Strahlung erfolgt dann mit Hilfe einer Photodiode, beispielsweise einer InGaAs-Photodiode 50. Aus dem Transmissionssignal und der gleichzeitig gemessenen Temperatur bestimmt das kalibrierte System den Gehalt des gelösten $CO_2$. Dieses Ausführungsbeispiel der Erfindung kann mit entsprechender Kalibrierung auch zur Qualitätskontrolle der Produktion von Bier, Biermixgetränken und Alkopops eingesetzt werden.

Weitere Ausführungsbeispiele sind:

Als Strahler wird ein Quarzrohrstrahl mit einer weitgehend homogenen Oberflächentemperatur von ungefähr 700° C eingesetzt.

Daraus resultierend liegt der Hauptteil der besonders leistungsstarken Emission im Wellenlängenbereich von 1,9 $\mu$m und 4 $\mu$m. Als Detektor wird eine Indium-Gallium-Arsenid-Photodiode eingesetzt, die insbesondere im langwelligen Bereich von 1,4 $\mu$m bis 2,2 $\mu$m eine gute spektrale Empfindlichkeit besitzt. Berücksichtigt man, dass die Absorptionsbande von Kohlendioxid im Bereich von 1,9 $\mu$m bis 2,1 $\mu$m liegt, wird deutlich, dass mit Hilfe des Quarzrohrstrahlers und der Indium-Gallium-Arsenid-Photodiode eine optische Druckmessung erfolgen kann.

In einem weiteren Ausführungsbeispiel erfolgt der Einsatz einer oder mehrerer LEDs als Strahlungsquelle. Das vorgesehene LED emittiert Strahlung im spektralen Bereich zwischen 2,0 $\mu$m und 2,1 $\mu$m. Entsprechend hierzu kann eine Indium-Gallium-Arsenid-Photodiode eingesetzt werden, um die transmittierte Strahlung zu empfangen. Die Leuchtdiode kann im gepulsten Betrieb eingesetzt werden. Bei der Verwendung von LEDs hat es sich als besonders vorteilhaft erwiesen, diese temperaturstabilisiert zu betreiben, um Schwankungen in der spektralen Emission zu verhindern.

**Patentansprüche**

1. Verfahren zur optischen Druckmessung eines Gases in einem geschlossenen Behälter (30) durch Lenkung einer Strahlung (20) eines Strahlers (10) durch den Behälter (30) und Messung der transmittierten Strahlung mit einem Detektor (50), wobei

- die Strahlung (20) des Strahlers (10) mindestens in einem ersten Wellenlängenbereich mit einem kontinuierlichen Spektrum abstrahlt, in dem eine Absorption der Strahlung (20) durch das Gas erfolgt,
- die Intensität der transmittierten Strahlung von dem Detektor (50) in einem zweiten Wellenlängenbereich erfasst wird,

**dadurch gekennzeichnet, dass**

- der zweite Wellenlängenbereich mindestens in dem Absorptionsbereich mit dem ersten Wellenlängenbereich überlappt, und
- eine aufakkumulierte Intensität der erfassten Strahlung in dem zweiten Wellenlängenbereich einem Druck des Gases zugeordnet wird, wobei die aufakkumulierte Intensität in dem zweiten Wellenlängenbereich der über den zweiten Wellenlängenbereich aufaddierten oder aufintegrierten Intensität entspricht.

2. Verfahren nach Anspruch 1, **dadurch gekennzeichnet, dass** die Strahlung (20) durch das Gas in der Gasphase gelenkt wird.

3. Verfahren nach Anspruch 1, **dadurch gekennzeichnet, dass** die Strahlung (20) durch das in einer Flüssigkeit gelöste Gas gelenkt wird.

4. Verfahren nach Anspruch 3, **dadurch gekennzeichnet, dass** als Strahler (10) ein thermischer Strahler vorgesehen ist, dessen abgestrahltes Spektrum einem Planckschen Spektrum entspricht.

5. Verfahren nach einem der Ansprüche 1 bis 3, **dadurch gekennzeichnet, dass** als Strahler (10) mindestens eine Leuchtdiode vorgesehen ist.

6. Verfahren nach einem der Ansprüche 1 bis 5, **dadurch gekennzeichnet, dass** der erste Wellenlängenbereich des Strahlers (10) durch einen oder mehrere Filter (40) auf den zweiten Wellenlängenbereich begrenzt wird.

7. Verfahren nach einem der Ansprüche 1 bis 6, **dadurch gekennzeichnet, dass** der Wert der aufakkumulierten Intensität über mindestens eine vorbestimmte Kennlinie einem Druckwert zugeordnet wird.

8. Verfahren nach einem der Ansprüche 1 bis 7, **dadurch gekennzeichnet, dass** als Gas Kohlendioxid vorgesehen ist.

9. Verfahren nach Anspruch 8, **dadurch gekennzeichnet, dass** die Strahlung (20) durch eine geschlossene Getränkeflasche gelenkt wird.

10. Verfahren nach einem der Ansprüche 1 bis 9, **dadurch gekennzeichnet, dass** die Strahlung (20) durch einen Behälter mit einer Schutzgasfüllung gelenkt wird.

11. Verfahren nach einem der Ansprüche 1 bis 8, **dadurch gekennzeichnet, dass** die Strahlung (20) durch einen vakuumverschlossenen Behälter gelenkt wird.

12. Verfahren nach Anspruch 1 bis 11, **dadurch gekennzeichnet, dass** die Zuordnung der aufakkumulierten Intensität zu dem Druck abhängig von dem Transmissionsspektrum des Behälters (30) erfolgt.

13. Vorrichtung zur optischen Druckmessung eines Gases in einem geschlossenen Behälter (30) mit einem Strahler (10), der eine Strahlung (20) in einem ersten Wellenlängenbereich mit einem kontinuierlichen Spektrum abstrahlt, wobei in dem ersten Wellenlängenbereich eine Absorption der Strahlung (20) durch das Gas erfolgt, einem Detektor (50), der die Intensität der durch den Behälter (30) und das Gas transmittierten Strahlung in einem zweiten Wellenlängenbereich erfasst, und mit einer Auswerteeinheit, die einer in dem zweiten Wellenlängenbereich aufakkumulierte Intensität einen Druckwert zuordnet, **dadurch gekennzeichnet, dass** der zweiten Wellenlängenbereich mindestens in dem Absorptionsbereich mit dem ersten Wellenlängenbereich überlappt, und die aufakkumulierte Intensität in dem zweiten Wellenlängenbereich der über den zweiten Wellenlängenbereich aufaddierten oder aufintegrierten Intensität entspricht.

14. Vorrichtung nach Anspruch 13, **dadurch gekennzeichnet, dass** ein thermischer Strahler vorgesehen ist, dessen abgestrahltes Spektrum einem Planckschen Spektrum entspricht.

15. Vorrichtung nach Anspruch 13, **dadurch gekennzeichnet, dass** eine oder mehrere Leuchtdioden mit einem kontinuierlichen Spektrum vorgesehen ist.

16. Vorrichtung nach einem der Ansprüche 13 bis 15, **dadurch gekennzeichnet, dass** der Detektor (50) innerhalb des zweiten Wellenlängenbereichs mehrere umschaltbare Messbereiche aufweist, in denen für unterschiedliche Druckbereiche des Gases der Druckwert ermittelt wird.

17. Vorrichtung nach Anspruch 13 bis 16, **dadurch gekennzeichnet, dass** die Auswerteeinheit eine Kennlinie aufweist, die der aufakkumulierten Intensität den Druckwert zuordnet.

**18.** Vorrichtung nach einem der Ansprüche 13 bis 17, **dadurch gekennzeichnet, dass** die Auswerteeinheit mehrere Kennlinien abhängig von dem Transmissionsspektrum des Behälters (30) aufweist, die jeweils der aufakkumulierten Intensität den Druckwert zuordnet.

**Claims**

**1.** Method for optical pressure measurement of a gas in a closed container (30) by directing a radiation (20) of a radiator (10) through the container (30) and measuring the transmitted radiation by a detector (50), wherein:

- the radiation (20) of the radiator (10) radiates in at least one first wavelength range a continuous spectrum, in which there is an absorption of the radiation (20) by the gas,
- the intensity of the transmitted radiation is detected in a second wavelength range by the detector (50),

**characterized in that**

- the second wavelength range overlaps at least in the absorption range with the first wavelength range, and
- an accumulated intensity of the detected radiation in the second wavelength range is assigned to a pressure of the gas, whereby the accumulated intensity in the second wavelength range corresponds to the added or integrated intensity in the second wavelength range.

**2.** The method according to claim 1, wherein the radiation (20) is directed through the gas in the gas phase.

**3.** The method according to claim 1, wherein the radiation (20) is directed through the gas which is dissolved in a liquid.

**4.** The method according to claim 3, wherein the radiator (10) is provided as a thermal radiator, whose radiated spectrum corresponds to a Planck spectrum.

**5.** A method according to one of claims 1 to 3, wherein at least one light emitting diode is provided as radiator (10).

**6.** A method according to one of claims 1 to 5, wherein the first wavelength range of the radiator (10) is limited to the second wavelength range by one or several filters (40).

**7.** A method according to one of claims 1 to 6, wherein the value of the accumulated intensity is assigned to a pressure value via at least one predetermined characteristic curve.

**8.** A method according to one of claims 1 to 7, wherein carbon dioxide is intended as gas.

**9.** The method according to claim 8, wherein the radiation (20) is directed through a closed beverage bottle.

**10.** A method according to one of claims 1 to 9, wherein the radiation (20) is directed through a container which is filled with a protective gas.

**11.** A method according to one of claims 1 to 8, wherein the radiation (20) is directed through a vacuum closed container.

**12.** A method according to one of claims 1 to 11, wherein the allocation of the accumulated intensity to the pressure takes place depending on the transmission spectrum of the container (30).

**13.** Device for the optical pressure measurement of a gas in a closed container (30), including:

a radiator (10), which generates a radiation (20) in a first wavelength range having a continuous spectrum, wherein there is an absorption of the radiation (20) by the gas in the first wavelength range,
a detector (50), which detects the intensity of the radiation (30) transmitted through the container and the gas in a second wavelength range, and
an analysing unit, which assigns a pressure value to an intensity accumulated in the second wavelength range,
wherein the second wavelength range overlaps at least in the absorption range with the first wavelength range, and
the accumulated intensity in the second wavelength range corresponds to the added or integrated intensity in the second wavelength range.

**14.** The device according to claim 13, wherein a thermal radiator is provided, whose radiated spectrum corresponds to a Planck spectrum.

**15.** The device according to claim 13, wherein one or several light emitting diodes with a continuous spectrum are provided.

**16.** A device according to one of claims 13 to 15, wherein within the second wavelength range, the detector (50) has several switchable measurement ranges, in which the pressure value is determined for different pressure ranges of the gas.

17. A device according to one of claims 13 to 16, wherein the analysing unit has a characteristic curve, which assigns the pressure value to the accumulated intensity.

18. A device according to one of claims 13 to 17, wherein the analysing unit has plural characteristic curves depending on the transmission spectrum of the container (30), each one assigning the pressure value to the accumulated intensity.

## Revendications

1. Procédé pour mesurer par voie optique la pression d'un gaz dans un contenant fermé (30) consistant à diriger un rayonnement (20) d'un émetteur de rayonnement (10) à travers le contenant (30) et à mesurer le rayonnement transmis au moyen d'un détecteur (50),

   - le rayonnement (20) de l'émetteur de rayonnement (10) rayonnant au moins dans une première plage de longueurs d'onde avec un spectre continu, dans laquelle se produit une absorption du rayonnement (20) par le gaz,
   - l'intensité du rayonnement transmis étant détectée par le détecteur (50) dans une seconde plage de longueurs d'onde,

   **caractérisé en ce que**

   - la seconde plage de longueurs d'onde chevauche la première plage de longueurs d'onde au moins dans la plage d'absorption, et
   - une intensité cumulée du rayonnement détecté dans la seconde plage de longueurs d'onde est associée à une pression du gaz, l'intensité cumulée dans la seconde plage de longueurs d'onde correspondant à l'intensité additionnée ou intégrée sur la seconde plage de longueurs d'onde.

2. Procédé selon la revendication 1, **caractérisé en ce que** le rayonnement (20) est dirigé à travers le gaz dans la phase gazeuse.

3. Procédé selon la revendication 1, **caractérisé en ce que** le rayonnement (20) est dirigé à travers le gaz dissout dans un liquide.

4. Procédé selon la revendication 3, **caractérisé en ce qu'**un émetteur de rayonnement thermique est prévu comme émetteur de rayonnement (10), dont le spectre émis correspond à un spectre de Planck.

5. Procédé selon l'une des revendications 1 à 3, **caractérisé en ce qu'**au moins une diode électroluminescente est prévue comme émetteur de rayonnement (10).

6. Procédé selon l'une des revendications 1 à 5, **caractérisé en ce que** la première plage de longueurs d'onde de l'émetteur de rayonnement (10) est limitée à la seconde plage de longueurs d'onde par un ou plusieurs filtres (40).

7. Procédé selon l'une des revendications 1 à 6, **caractérisé en ce que** la valeur de l'intensité cumulée est associée à une valeur de pression par le biais d'au moins une courbe caractéristique prédéfinie.

8. Procédé selon l'une des revendications 1 à 7, **caractérisé en ce que** du dioxyde de carbone est prévu comme gaz.

9. Procédé selon la revendication 8, **caractérisé en ce que** le rayonnement (20) est dirigé à travers une bouteille pour boisson fermée.

10. Procédé selon l'une des revendications 1 à 9, **caractérisé en ce que** le rayonnement (20) est dirigé à travers un contenant rempli avec un gaz protecteur.

11. Procédé selon l'une des revendications 1 à 8, **caractérisé en ce que** le rayonnement (20) est dirigé à travers un contenant fermé à vide.

12. Procédé selon les revendications 1 à 11, **caractérisé en ce que** l'association entre l'intensité cumulée et la pression est effectuée en fonction du spectre de transmission du contenant (30).

13. Dispositif pour mesurer par voie optique la pression d'un gaz dans un contenant fermé (30) comprenant un émetteur de rayonnement (10), qui émet un rayonnement (20) dans une première plage de longueurs d'onde avec un spectre continu, une absorption du rayonnement (20) par le gaz se produisant dans la première plage de longueurs d'onde, un détecteur (50), qui détecte l'intensité du rayonnement transmis à travers le contenant (30) et le gaz dans une seconde plage de longueurs d'onde, et une unité d'évaluation, qui associe une valeur de pression à une intensité cumulée dans la seconde plage de longueurs d'onde, **caractérisé en ce que** la seconde plage de longueurs d'onde chevauche la première plage de longueurs d'onde au moins dans la plage d'absorption, et l'intensité cumulée dans la seconde plage de longueurs d'onde correspond à l'intensité additionnée ou intégrée sur la seconde plage de longueurs d'onde.

**14.** Dispositif selon la revendication 13, **caractérisé en ce qu'**un émetteur de rayonnement thermique est prévu, dont le spectre émis correspond à un spectre de Planck.

**15.** Dispositif selon la revendication 13, **caractérisé en ce qu'**une ou plusieurs diodes électroluminescentes avec un spectre continu sont prévues.

**16.** Dispositif selon l'une des revendications 13 à 15, **caractérisé en ce que** le détecteur (50) comporte plusieurs plages de mesure commutables dans la seconde plage de longueurs d'onde, dans lesquelles la valeur de pression est déterminée pour différentes plages de pression du gaz.

**17.** Dispositif selon les revendications 13 à 16, **caractérisé en ce que** l'unité d'évaluation comporte une courbe caractéristique, qui associe la valeur de pression à l'intensité cumulée.

**18.** Dispositif selon l'une des revendications 13 à 17, **caractérisé en ce que** l'unité d'évaluation comporte plusieurs courbes caractéristiques en fonction du spectre de transmission du contenant (30), qui associent respectivement la valeur de pression à l'intensité cumulée.

# Verfahren zur optischen Druckmessung
## Figur 1

Verfahren zur optischen Druckmessung
Figur 2

# Verfahren zur optischen Druckmessung
## Figur 2 a

EP 2 433 108 B1

# Verfahren zur optischen Druckmessung
## Figur 3

EP 2 433 108 B1

Verfahren zur optischen Druckmessung
Figur 4

EP 2 433 108 B1

Weißglas

Druck [hPa]

Signal [V]

20

22

EP 2 433 108 B1

16

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 409673
- GB 2373584 A
- US 6874351 B
- DE 102007027708 A1
- DE 102006001902 B4
- DE 102006030296 A1
- JP 002006030161 AA
- EP 1450139 A
- US 20050022603 A1
- DE 2727976
- US 5614718 A
- WO 2008053507 A2
- JP 62156543 A
- EP 1808683 A
- US 5573161 A